# EUROPÄISCHE PATENTSCHRIFT

(11) **EP 2 880 288 B1**
(45) Veröffentlichungstag und Bekanntmachung des Hinweises auf die Patenterteilung: **05.06.2019**
(21) Anmeldenummer: 13742400.8
(22) Anmeldetag: 26.07.2013
(51) Int. Cl.: F01N 3/023, F01N 13/10, F02B 37/02, F02D 41/00, F02D 41/02, F02M 26/05, F02M 26/16, F02M 26/43, F02M 26/71

(54) **VERFAHREN ZUM BEHANDELN VON ABGAS UND ANORDNUNG EINER ABGASANLAGE AN EINER VERBRENNUNGSKRAFTMASCHINE**
METHOD FOR TREATING EXHAUST GAS AND ARRANGEMENT OF AN EXHAUST GAS SYSTEM ON AN INTERNAL COMBUSTION ENGINE
PROCÉDÉ DE TRAITEMENT DE GAZ D'ÉCHAPPEMENT ET AGENCEMENT D'UN SYSTÈME D'ÉCHAPPEMENT SUR UN MOTEUR À COMBUSTION INTERNE

(30) Priorität: 01.08.2012 DE 102012015259
(43) Veröffentlichungstag der Anmeldung: 10.06.2015
(73) Patentinhaber: Daimler AG, 70327 Stuttgart (DE)
(72) Erfinder: KÜNZEL, Stefan, 71336 Waiblingen (DE)
(74) Vertreter: JENSEN & SON
(86) Internationale Anmeldenummer: PCT/EP2013/002227
(87) Internationale Veröffentlichungsnummer: WO 2014/019667

(56) Entgegenhaltungen:
- EP-A1- 2 295 769
- DE-A1-102005 017 099
- DE-A1-102008 039 085
- DE-B3-102004 043 529
- DE-C1- 19 730 403
- JP-A- 2006 046 253
- US-A- 5 517 976
- US-A1- 2011 023 829
- US-A1- 2012 078 492

## Beschreibung

Die Erfindung betrifft ein Verfahren zum Behandeln von Abgas einer Verbrennungskraftmaschine, bei welchem in wenigstens einen ersten Zylinder der Verbrennungskraftmaschine weniger Kraftstoff eingebracht wird als in wenigstens einen zweiten Zylinder der Verbrennungskraftmaschine. Aus dem wenigstens einen ersten Zylinder austretendes Abgas wird zumindest teilweise in einen Zulufttrakt der Verbrennungskraftmaschine rückgeführt. Zumindest das Abgas des wenigstens einen zweiten Zylinders wird einer Abgasnachbehandlungseinrichtung zugeführt. Des Weiteren betrifft die Erfindung eine Anordnung einer Abgasanlage an einer Verbrennungskraftmaschine eines Fahrzeugs.

Die EP 2 206 898 A1 beschreibt ein Verfahren zur Nachbehandlung des Abgases einer mehrzylindrigen Verbrennungskraftmaschine eines Fahrzeugs, bei welchem im Schwachlastbetrieb der Verbrennungskraftmaschine eine erste Gruppe von Zylindern mit Kraftstoff beaufschlagt wird, während eine zweite Gruppe von Zylindern mit weniger oder mit gar keinem Kraftstoff beaufschlagt wird. Von jeder der beiden Zylindergruppen führt eine Abgasleitung zu einer jeweiligen Flut einer zweiflutigen Turbine eines Abgasturboladers. Von diesen beiden Abgasleitungen zweigt eine jeweilige Abgasrückführleitung ab, wobei die durch diese Abgasrückführleitungen strömende Menge an Abgas jeweils separat einstellbar ist. Die von einem Verdichter des Abgasturboladers verdichtete Zuluft für die Verbrennungskraftmaschine wird den jeweiligen Zylindergruppen über eine separate Zuluftleitung zugeführt, wobei in jeder der beiden Zuluftleitungen eine Drosselklappe angeordnet ist. Im Heizbetrieb wird nun die Zylindergruppe, in deren Zylinder weniger oder gar kein Kraftstoff eingespritzt wird, mit einem gedrosselten Zuluftstrom beaufschlagt, und eine Abgasrückführklappe der dieser Zylindergruppe zugeordneten Abgasrückführleitung ist geöffnet. Das Abgas der Zylinder der anderen Zylindergruppe wird demgegenüber nicht rückgeführt, sondern der Turbine des Abgasturboladers zugeführt. Dadurch strömt vergleichsweise heißes Abgas durch die Turbine und im weiteren Verlauf einem Katalysator zu.

Bei dieser Anordnung ist eine Vielzahl von Leitungen mit jeweiligen Drosselelementen notwendig, um die gewünschte Anhebung der Temperatur des Abgases zu erreichen. Dies ist sehr aufwändig. DE102005017099 beschreibt auch ein Verfahren und eine Anordnung zum Behandeln des Abgases.

Aufgabe der vorliegenden Erfindung ist es daher, ein Verfahren sowie eine Anordnung der eingangs genannten Art zu schaffen, welches bzw. welche auf besondere einfache Art und Weise eine Erhöhung der Abgastemperatur zulässt.

Diese Aufgabe wird durch ein Verfahren mit den Merkmalen des Patentanspruchs 1 und durch eine Anordnung mit den Merkmalen des Patentanspruchs 8 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren wird eine Abgasleitung, über welche Abgas des wenigstens einen ersten Zylinders der Abgasnachbehandlungseinrichtung zuführbar ist, zumindest partiell versperrt. Dadurch wird sichergestellt, dass Abgas, welches aus dem wenigstens einen ersten, mit einer geringen oder auf Null verringerten Kraftstoffmenge betriebenen Zylinder stammt, allenfalls zu einem geringen Anteil zu der Abgasnachbehandlungseinrichtung gelangt. Demgegenüber trägt das Abgas, welches aus dem wenigstens einen zweiten Zylinder stammt, in erhöhtem Maße zu der Temperatur bei, welche das der Abgasnachbehandlungseinrichtung zugeführte Abgas aufweist. Dies wird auf besonders einfachem Wege erreicht, nämlich durch das Versperren der Abgasleitung, welche dem wenigstens einen ersten Zylinder zugeordnet ist. Es sind so für den wenigstens einen ersten Zylinder und den wenigstens einen zweiten Zylinder keine separaten Luftzufuhrleitungen und Drosseleinheiten zum Androsseln erforderlich. Dennoch trägt der wenigstens eine erste Zylinder mit der - insbesondere auf Nullverringerten Einspritzmenge so gut wie nichts zur Temperatur des Abgases bei.

Durch das Reduzieren der in den wenigstens einen ersten Zylinder der Verbrennungskraftmaschine eingebrachten Menge an Kraftstoff sinkt die effektive Abgasrückführungsrate. Dies liegt daran, dass für die dem wenigstens einen ersten Zylinder zugeführte Zuluft weniger Kraftstoff zur Verfügung steht, welcher in Abgas umgesetzt werden kann. Durch das Verringern der Abgasrückführungsrate werden auch die Rußemissionen der Verbrennungskraftmaschine stark abgesenkt. Des Weiteren wird eine vergleichsweise große Menge an Stickoxiden gebildet, welche nach einem Oxidieren von NO zu NO₂ für das Oxidieren von, beispielsweise in einem Partikelfilter zurückgehaltenen, Rußpartikeln zur Verfügung stehen. Es kann so auf einfache Art und Weise eine passive Regeneration des Partikelfilters erreicht werden. Es braucht also für das Regenerieren des Partikelfilters nicht zusätzlich zu der Verbrennungskraftmaschine eine Dosiereinrichtung zum Einbringen von Kraftstoff in das Abgas vorgesehen zu werden.

Die Temperatur des der Abgasnachbehandlungseinrichtung zugeführten Abgases kann auf diese Weise besonders effektiv erhöht werden. Dadurch kann eine Nacheinspritzung in die Zylinder der Verbrennungskraftmaschine entfallen. Dies ist günstig, da aufgrund des späten Zeitpunkts einer solchen Nacheinspritzung die Zylinderwände mit Kraftstoff benetzt werden können, was wiederum aufgrund der damit einhergehenden Verdünnung des Motoröls zu mechanischen Problemen führen kann. Auch eine Drosselklappe im Zulufttrakt der Verbrennungskraftmaschine kann entfallen, so dass die mit einer solchen Drosselklappe verbundenen Kosten und etwaige Probleme mit der Zuverlässigkeit einer solchen Drosselklappe vermieden sind. Das Verfahren zeichnet sich also durch eine besonders große Zuverlässigkeit und durch Kostenvorteile aus.

Durch die asymmetrische Einspritzung, bei welcher in den wenigstens einen ersten Zylinder der Verbrennungskraftmaschine weniger Kraftstoff eingebracht wird als in den wenigstens einen zweiten Zylinder der Verbrennungskraftmaschine lässt sich jedoch nicht nur auf besonders einfache Art und Weise eine Erhöhung der Temperatur des Abgases erreichen, sondern sie bietet auch die Möglichkeit, eine vergleichsweise hohe Abgasrückführungsrate zu erzielen, wenn dies erwünscht ist. Hierfür wird dann in den wenigstens einen Zylinder, dessen Abgas rückgeführt wird, mehr Kraftstoff eingespritzt als in den wenigstens einen Zylinder, dessen Abgas nicht rückgeführt wird.

Ein besonders einfacher Aufbau der Abgasanlage lässt sich erreichen, wenn gemäß einer vorteilhaften Ausgestaltung der Erfindung mittels einer Verstelleinrichtung, welche zum zumindest partiellen Versperren oder Freigeben der Abgasleitung ausgebildet ist, die Abgasmenge eingestellt wird, welche in den Zulufttrakt der Verbrennungskraftmaschine rückgeführt wird. Mit anderen Worten dient die Verstelleinrichtung nicht nur dem Versperren der Abgasleitung, sondern zugleich als Abgasrückführungsventil. So kann besonders einfach eine definierte Verteilung des Abgasstroms des mit einer besonders geringen Kraftstoffmenge oder gar keinem Kraftstoff betriebenen wenigstens einen ersten Zylinders auf eine Abgasrückführleitung und die zur Abgasnachbehandlungseinrichtung führende Abgasleitung erreicht werden. Dies macht das Verfahren besonders einfach durchführbar.

Als weiter vorteilhaft hat es sich gezeigt, wenn die Verbrennungskraftmaschine in einem niedrigen bis mittleren Lastbereich betrieben und hierbei die Abgasleitung vollständig versperrt und so das aus dem wenigstens einen ersten Zylinder austretende Abgas vollständig in den Zulufttrakt der Verbrennungskraftmaschine rückgeführt wird. Dann hat das aus dem wenigstens einen ersten Zylinder austretende Abgas keinerlei Einfluss auf die Temperatur des Abgases, wie sie stromaufwärts der Abgasnachbehandlungseinrichtung vorliegt.

Dieses vollständige Rückführen des Abgases in den Zulufttrakt lässt sich insbesondere bis zu einem mittleren Lastbereich von beispielsweise bis 800 Nm durchführen, da aufgrund der verringerten Abgasmenge, welche den wenigstens einen ersten Zylinder verlässt, die Abgasrückführungsrate verringert ist. Demgegenüber lässt sich nämlich bei einer Verbrennungskraftmaschine, bei welcher alle Zylinder mit einer gleich großen Menge an Kraftstoff beaufschlagt werden, ein vollständiges Rückführen des Abgases lediglich in einem vergleichsweise niedrigen Lastbereich, beispielsweise in einem Lastbereich von bis etwa 400 Nm erreichen, ohne den Betrieb der Verbrennungskraftmaschine zu beeinträchtigen.

Als weiter vorteilhaft hat es sich gezeigt, wenn in den wenigstens einen zweiten Zylinder um so viel mehr Kraftstoff eingebracht wird, als in den wenigstens einen ersten Zylinder weniger Kraftstoff eingebracht wird. Hierbei wird ein Drehmoment der Verbrennungskraftmaschine zumindest im Wesentlichen beibehalten, welches bei einer gleichmäßigen Verteilung der für dieses Drehmoment vorzusehenden Kraftstoffmenge auf die Zylinder der Verbrennungskraftmaschine erreichbar ist. Dadurch fällt trotz der asymmetrischen Einspritzung das Drehmoment der Verbrennungskraftmaschine nicht ab.

Von Vorteil ist es weiterhin, wenn dem wenigstens einen ersten Zylinder und dem wenigstens einen zweiten Zylinder die jeweilige Zuluft über denselben Zulufttrakt zugeführt wird. Dadurch brauchen keine aufwändigen, separaten Luftzufuhrleitungen vorgesehen zu werden, so dass ein besonders einfacher Aufbau des Zulufttrakts erreicht ist.

In einer weiteren vorteilhaften Ausgestaltung der Erfindung wird den Zylindern der Verbrennungskraftmaschine die Zuluft ungedrosselt zugeführt. Dadurch kann nämlich auf das Vorsehen einer Drosseleinrichtung im Ansaugtrakt verzichtet werden und die Steuerung der Luftzufuhr zu der Verbrennungskraftmaschine vereinfacht sich.

Bevorzugt wird bei zumindest partiell versperrter Abgasleitung ein Partikelfilter als Abgasnachbehandlungseinrichtung regeneriert. Hierbei kann sowohl ein aktives Regenerieren des Partikelfilters vorgesehen sein, also ein Regenerieren durch zusätzlich in das Abgas eingebrachten, nicht bereits in der Verbrennungskraftmaschine verbrannten Kraftstoff, oder ein passives Regenerieren, bei welchem der im Partikelfilter zurückgehaltene Ruß mittels Stickstoffdioxid oxidiert wird.

Schließlich hat es sich als vorteilhaft gezeigt, wenn über die versperrbare Abgasleitung Abgas einer ersten Flut einer Turbine eines Abgasturboladers zuführbar ist, während über eine zweite Abgasleitung Abgas des wenigstens einen zweiten Zylinders einer zweiten Flut der Turbine zugeführt wird. So wird sichergestellt, dass sich allenfalls stromabwärts der Turbine Abgas aus dem wenigstens einen ersten Zylinder mit Abgas aus dem wenigstens einen zweiten Zylinder mischt. Das Abgas kann hier insbesondere den beiden Fluten einer asymmetrischen Turbine zugeführt werden, um über einen besonders großen Betriebsbereich der Verbrennungskraftmaschine dieser verdichtete Zuluft zur Verfügung zu stellen.

Bei der erfindungsgemäßen Anordnung einer Abgasanlage an einer Verbrennungskraftmaschine eines Fahrzeugs weist die Verbrennungskraftmaschine wenigstens einen ersten Zylinder und wenigstens einen zweiten Zylinder auf. Mittels einer Steuerungseinrichtung ist ein Beaufschlagen der ersten und zweiten Zylinder mit voneinander verschiedenen Kraftstoffmengen bewirkbar. Über eine Abgasrückführleitung ist aus dem wenigstens einen ersten Zylinder austretendes Abgas zumindest teilweise in einen Zulufttrakt der Verbrennungskraftmaschine rückführbar. Die Abgasrückführleitung zweigt von einer ersten Abgasleitung ab, über welche Abgas des wenigstens einen ersten Zylinders einer Abgasnachbehandlungseinrichtung zuführbar ist. Über eine zweite Abgasleitung ist das Abgas des wenigstens einen zweiten Zylinders der Abgasnachbehandlungseinrichtung zuführbar. Hierbei ist in der ersten Abgasleitung eine Verstelleinrichtung angeordnet, mittels welcher die erste Abgasleitung zumindest partiell versperrbar oder freigebbar ist. Mittels der Steuerungseinrichtung ist eine asymmetrische Einspritzung in die ersten Zylinder und die zweiten Zylinder realisierbar, und durch das Versperren der ersten Abgasleitung ist erreichbar, dass vorwiegend das Abgas aus dem wenigstens einen zweiten Zylinder der Abgasnachbehandlungseinrichtung zugeführt wird. Auf diese Weise lässt sich mit besonders einfachen Mitteln, nämlich durch das Nutzen der Verstelleinrichtung, auch bei niedriger Last das Zuführen von vergleichsweise heißem Abgas zu der Abgasnachbehandlungseinrichtung erreichen. So kann selbst bei niedriger Last der Verbrennungskraftmaschine die Abgasnachbehandlungseinrichtung auf ihre Anspringtemperatur gebracht werden, bei welcher sie besonders weitgehend im Abgas enthaltene Schadstoffe umwandelt oder behandelt. Wenn es sich bei der Abgasnachbehandlungseinrichtung um einen Partikelfilter handelt, so kann dieser durch das Erhöhen der Abgastemperatur regeneriert werden.

Bevorzugt ist mittels der Verstelleinrichtung die Abgasmenge einstellbar, welche über die erste Abgasleitung in den Zulufttrakt der Verbrennungskraftmaschine rückführbar ist. Dann braucht lediglich eine solche Verstelleinrichtung zum Versperren der ersten Abgasleitung und zugleich zum Einstellen der Abgasrückführungsrate vorgesehen zu werden.

Die für das erfindungsgemäße Verfahren beschriebenen Vorteile und bevorzugten Ausführungsformen gelten auch für die erfindungsgemäße Anordnung und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisch einen Verbrennungsmotor eines Kraftfahrzeugs, bei welchem das Abgas zweier Zylindergruppen über jeweilige Abgasleitungen einer Turbine eines Abgasturboladers zugeführt wird, wobei mittels einer Abgasrückführungsklappe eine der beiden Abgasleitungen versperrt werden kann, welche von Abgas einer Zylindergruppe durchströmt wird, welche mit verringerten Kraftstoffmengen beaufschlagt werden;
- Fig. 2: ausschnittsweise in einer geschnittenen Detailansicht die beiden Abgasleitungen mit der in einer der beiden Abgasleitungen angeordneten Abgasrückführungsklappe; und
- Fig. 3: Kurven, welche das Erhöhen der Abgastemperatur und des Stickoxidgehalts sowie das Verringern der Rußemissionen der Verbrennungskraftmaschine in Abhängigkeit von der asymmetrischen Einspritzung in die beiden Zylindergruppen veranschaulichen.

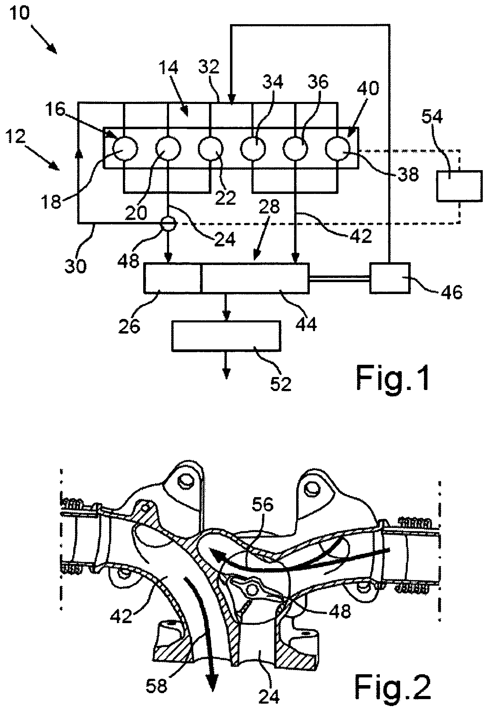

Fig. 1 zeigt schematisch eine Anordnung 10 einer Abgasanlage 12 an einem Verbrennungsmotor 14 eines Kraftfahrzeugs, bei welchem es sich insbesondere um ein Nutzfahrzeug handeln kann. Der Verbrennungsmotor 14 umfasst eine erste Zylindergruppe 16 mit vorliegend drei ersten Zylindern 18, 20, 22.

Das Abgas dieser drei ersten Zylinder 18, 20, 22 wird über eine erste Abgasleitung 24 einer ersten, kleinen Flut 26 einer asymmetrischen Turbine 28 eines Abgasturboladers zugeführt. Von der ersten Abgasleitung 24 zweigt eine Abgasrückführleitung 30 ab, über welche rückgeführtes Abgas in einen Zulufttrakt 32 des Verbrennungsmotors 14 eingebracht wird.

Die drei Zylinder 18, 20, 22 der ersten Zylindergruppe 16 werden bei niedriger Last des Verbrennungsmotors 14 mit einer geringeren Kraftstoffmenge beaufschlagt als drei weitere Zylinder 34, 36, 38 einer zweiten Zylindergruppe 40 des Verbrennungsmotors 14. Das aus dieser Zylindergruppe 40 mit den zweiten Zylindern 34, 36, 38 strömende Abgas wird über eine zweite Abgasleitung 42 einer zweiten, größeren Flut 44 der Turbine 28 zugeführt. Von dieser zweiten Abgasleitung 42 zweigt keine Abgasrückführleitung zum Zulufttrakt 32 ab.

Sowohl den ersten Zylindern 18, 20, 22 als auch den zweiten Zylindern 34, 36, 38 wird die von einem Verdichter 46 des Abgasturboladers verdichtete Zuluft mit einem Luftverhältnis λ > 1 und ungedrosselt zugeführt.

Die asymmetrische Einspritzung in die Zylinder der beiden Zylindergruppen 16, 40 erfolgt derart, dass in die ersten Zylinder 18, 20, 22 um so viel weniger Kraftstoff eingespritzt wird, als in die zweiten Zylinder 34, 36, 38 mehr Kraftstoff eingespritzt wird, um ein bei dieser insgesamt eingespritzten Kraftstoffmenge erreichbares Drehmoment des Verbrennungsmotors 14 aufrecht zu erhalten.

Die asymmetrische Einspritzung dient hierbei der Erhöhung der Temperatur des die Turbine 28 verlassenden Abgases. Um dies auch bei niedriger Last des Verbrennungsmotors 14 zu erreichen, wird mittels einer Verstelleinrichtung in Form einer Abgasrückführungsklappe 48 die erste Abgasleitung 24 vollständig versperrt, und so das aus den ersten Zylindern 18, 20, 22 ausströmende Abgas vollständig in den Zulufttrakt 32 rückgeführt. Die Temperatur des die Turbine 28 verlassenden Abgases wird also ausschließlich von der Kraftstoffmenge beeinflusst, welche in die zweiten Zylinder 34, 36, 38, also in die Zylinder der zweiten Zylindergruppe 40, eingespritzt wird. Dadurch, dass das die Zylinder 18, 20, 22 der ersten Zylindergruppe 16 verlassende Abgas nicht zur Temperatur desselben stromabwärts der Turbine 28 beiträgt, lässt sich durch die asymmetrische Einspritzung eine besonders effiziente und starke Temperaturerhöhung des Abgases erreichen.

Durch das Verringern der in die ersten Zylinder 18, 20, 22 eingespritzten Kraftstoffmenge, insbesondere durch ein Verringern dieser Kraftstoffmenge auf Null, wird zudem die Abgasrückführungsrate abgesenkt. Dies führt zu einer starken Absenkung der Rußemission des Verbrennungsmotors 14 und gleichzeitig zu einem Anstieg des Stickoxidgehalts im Abgas.

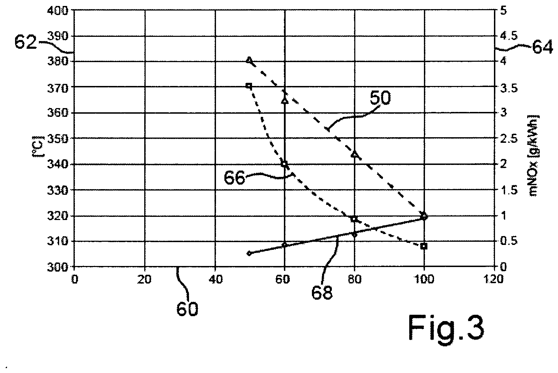

Durch vollständiges Öffnen des Abgasrückführungsventils 48, welches zugleich ein vollständiges Versperren der ersten Abgasleitung 24 in Richtung der kleineren Flut 26 der Turbine 28 bewirkt, wird kein Abgas in diese kleinere, erste Flut 26 der Turbine 28 eingebracht. Dies bewirkt eine Erhöhung der Temperatur des aus der Turbine 28 austretenden Abgases, da der Turbine 28 lediglich das Abgas der zweiten Zylindergruppe 40 zugeführt wird, welche mit einer vergrößerten Kraftstoffmenge beaufschlagt werden . Die Temperatur des aus den ersten Zylindern 18, 20, 22 austretenden Abgases hat also keinen Einfluss auf die Abgastemperatur, welche stromabwärts der Turbine 28 vorliegt und welche in Fig. 3 durch eine Kurve 50 veranschaulicht ist.

Die Verringerung der in die ersten Zylinder 18, 20, 22 eingebrachten Kraftstoffmenge ist gleich der Vergrößerung der in die zweiten Zylinder 34, 36, 38 eingebrachten Kraftstoffmenge und führt so zur gewünschten Temperaturerhöhung. Das heiße Abgas strömt dann einer Abgasnachbehandlungseinrichtung in Form eines Partikelfilters 52 zu. So kann der Partikelfilter 52 aktiv regeneriert werden, indem bei der erhöhten Temperatur des Abgases die in diesem zurückgehaltenen Rußpartikel kontrolliert abgebrannt werden. Auch ein passives Regenerieren des Partikelfilters 52 durch NO₂ ist möglich, welches mittels eines (nicht gezeigten) Oxidationskatalysators gebildet wird. Ein solcher Oxidationskatalysator ist üblicherweise dem Partikelfilter 52 vorgeschaltet.

Dadurch, dass durch das Verringern der in die ersten Zylinder 18, 20, 22 eingespritzten Kraftstoffmenge eine verringerte Abgasrückführungsrate erreicht wird, lässt sich das Abgas durch vollständiges Öffnen der Abgasrückführungsklappe 48 selbst bis in Bereiche mittlerer Last des Verbrennungsmotors 14 rückführen, beispielsweise bis zu einer Last von 800 Nm.

Das Ansteuern der Abgasrückführungsklappe 48 sowie von Einspritzventilen, welche den Kraftstoff in die Zylinder 18, 20, 22, 34, 36, 38 einspritzen, wird mittels eines Steuergeräts 54 der Anordnung 10 vorgenommen.

Aus Fig. 2 ist besonders gut ersichtlich, wie durch Versperren der ersten Abgasleitung 24 mittels der Abgasrückführungsklappe 48 ein aus den ersten Zylindern 18, 20, 22 stammender Abgasstrom vollständig rückgeführt werden kann, wobei dieser rückgeführte Abgasstrom durch einen Strömungspfeil 56 veranschaulicht ist. In analoger Weise veranschaulicht ein Strömungspfeil 58 das Strömen des aus den zweiten Zylindern 34, 36, 38 stammenden Abgases über die zweite Abgasleitung 42 hin zur Turbine 28 des Abgasturboladers.

Die Abgasrückführungsklappe 48, welche als 3/2-Wege-Steuerventil wirkt, ermöglicht die definierte Verteilung des Abgasstroms der mit geringerer Kraftstoffmenge betriebenen Zylindergruppe 16 auf die Abgasrückführungsleitung 30 einerseits und die Zuleitung zur ersten Flut 26 der Turbine 48 andererseits. Wie aus Fig. 2 hervorgeht, ist dieses Steuerventil bevorzugt im Abgaskrümmer angeordnet. Im Heizbetrieb, wenn also bei niedriger Last des Verbrennungsmotors 14 dem Partikelfilter 52 besonders heißes Abgas zugeführt werden soll, wird bevorzugt der volle Abgasstrom der Zylindergruppe 16, in welche die geringere Kraftstoffmenge oder gar kein Kraftstoff eingebracht wird, in die Abgasrückführleitung 30 geleitet, und die Zuleitung zur kleineren Flut 26 der Turbine 28 wird abgesperrt.

In einem in Fig. 3 gezeigten Graphen sind die Auswirkungen der wie oben beschrieben durchgeführten asymmetrischen Einspritzung in die Zylindergruppen 16, 40 veranschaulicht. Auf einer Abszisse 60 ist die Asymmetrie der eingespritzten Kraftstoffmenge in % angegeben, wobei die in die ersten Zylinder 18, 20, 22 insgesamt eingespritzte Kraftstoffmenge auf die in die zweiten Zylinder 34, 36, 38 insgesamt eingespritzte Kraftstoffmenge bezogen ist. Auf einer ersten Ordinate 62 ist eine Temperatur in ° C angegeben, wobei die Kurve 50 die Temperatur am Ausgang der Turbine 28 in Abhängigkeit von der asymmetrischen Einspritzung wiedergibt. Entsprechend steigt die Temperatur mit zunehmender Asymmetrie stark und im Wesentlichen linear an.

Auf einer zweiten Ordinate 64 ist der Stickoxidgehalt des Abgases angegeben, vorliegend in g/kWh abgegebener Leistung des Verbrennungsmotors 14. Eine Kurve 66 veranschaulicht die mit steigender Asymmetrie der Einspritzung überproportional stark ansteigende Menge an Stickoxid im Abgas. Eine weitere Kurve 68 gibt die Rußemission des Verbrennungsmotors 14 an. Anhand dieser ebenso wie die Kurve 50 im Wesentlichen linearen Kurve 68 ist ersichtlich, dass mit zunehmender Asymmetrie der Einspritzung der Rußgehalt des Abgases abnimmt.

Die in dem Graphen in Fig. 3 gezeigten Kurven 50, 66, 68 beziehen sich auf einen Betrieb des Verbrennungsmotors 14 mit 460 Nm und 1300 Umdrehungen/Min.

### Bezugszeichenliste

- 10: Anordnung
- 12: Abgasanlage
- 14: Verbrennungsmotor
- 16: Zylindergruppe
- 18: Zylinder
- 20: Zylinder
- 22: Zylinder
- 24: Abgasleitung
- 26: Flut
- 28: Turbine
- 30: Abgasrückführleitung
- 32: Zulufttrakt
- 34: Zylinder
- 36: Zylinder
- 38: Zylinder
- 40: Zylindergruppe
- 42: Abgasleitung
- 44: Flut
- 46: Verdichter
- 48: Abgasrückführungsklappe
- 50: Kurve
- 52: Partikelfilter
- 54: Steuergerät
- 56: Strömungspfeil
- 58: Strömungspfeil
- 60: Abszisse
- 62: Ordinate
- 64: Ordinate
- 66: Kurve
- 68: Kurve

## Patentansprüche

1. Verfahren zum Behandeln von Abgas einer Verbrennungskraftmaschine (14) mit wenigstens einem ersten Zylinder (18, 20, 22) dessen Abgas über eine erste Abgasleitung (24) einer ersten, kleinen Flut (26) einer asymmetrischen Turbine (28) eines Abgasturboladers und weiter einem Partikelfilter (52) zuführbar ist und mit wenigstens einem zweiten Zylinder (34, 36, 38) dessen Abgas über eine zweite Abgasleitung (42) einer zweiten, größeren Flut (44) der Turbine (28) und weiter dem Partikelfilter (52) zuführbar ist, bei welchem zur Regeneration des Partikelfilters (52)
- in den wenigstens einen ersten Zylinder (18, 20, 22) weniger Kraftstoff eingebracht wird als in den wenigstens einen zweiten Zylinder (34, 36, 38),
- aus dem wenigstens einen ersten Zylinder (18, 20, 22) austretendes Abgas zumindest teilweise in einen Zulufttrakt (32) der Verbrennungskraftmaschine (14) rückgeführt wird,
- das Abgas des wenigstens einen zweiten Zylinders (34, 36, 38) vollständig dem Partikelfilter (52) zugeführt wird,
- die Abgasleitung (24), über welche Abgas des wenigstens einen ersten Zylinders (18, 20, 22) dem Partikelfilter (52) zuführbar ist, zumindest partiell versperrt wird, **dadurch gekennzeichnet, dass**
unter Verzicht auf eine Nacheinspritzung in die Zylinder (18, 20, 22, 34, 36, 38) in den wenigstens einen zweiten Zylinder (34, 36, 38) um so viel mehr Kraftstoff eingebracht wird als in den wenigstens einen ersten Zylinder (18, 20, 22) weniger Kraftstoff eingebracht wird, wobei ein Drehmoment der Verbrennungskraftmaschine (14) zumindest im Wesentlichen beibehalten wird, welches bei einer gleichmäßigen Verteilung der für dieses Drehmoment vorzusehenden Kraftstoffmenge auf die Zylinder (18, 20, 22, 34, 36, 38) der Verbrennungskraftmaschine (14) erreichbar ist.

2. Verfahren nach Anspruch 1,
**dadurch gekennzeichnet, dass**
mittels einer zum zumindest partiellen Versperren oder Freigeben der Abgasleitung (24) ausgebildeten Verstelleinrichtung (48) die Abgasmenge eingestellt wird, welche in den Zulufttrakt (32) der Verbrennungskraftmaschine (14) rückgeführt wird.

3. Verfahren nach Anspruch 1 oder 2,
**dadurch gekennzeichnet, dass**
die Verbrennungskraftmaschine (14) in einem niedrigen bis mittleren Lastbereich, betrieben und hierbei die Abgasleitung (24) vollständig versperrt und das aus dem wenigstens einen ersten Zylinder (18, 20, 22) austretende Abgas vollständig in den Zulufttrakt (32) der Verbrennungskraftmaschine (14) rückgeführt wird.

4. Verfahren nach Anspruch 3,
**dadurch gekennzeichnet, dass**
die Verbrennungskraftmaschine (14) in einem Lastbereich von 400 Nm bis 800 Nm, betrieben wird.

5. Verfahren nach einem der Ansprüche 1 bis 4,
**dadurch gekennzeichnet, dass**
dem wenigstens einen ersten Zylinder (18, 20, 22) und dem wenigstens einen zweiten Zylinder (34, 36, 38) die jeweilige Zuluft über denselben Zulufttrakt (32) zugeführt wird.

6. Verfahren nach einem der Ansprüche 1 bis 5,
**dadurch gekennzeichnet, dass**
den Zylindern (18, 20, 22, 34, 36, 38) der Verbrennungskraftmaschine (14) die Zuluft ungedrosselt zugeführt wird.

7. Verfahren nach einem der Ansprüche 1 bis 6,
**dadurch gekennzeichnet, dass**
Abgas des wenigstens einen ersten Zylinders (18, 20, 22) sich allenfalls stromabwärts der Turbine (28) mit Abgas des wenigstens einen zweiten Zylinders (34, 36, 38) vermischt.

8. Anordnung einer Abgasanlage (12) an einer Verbrennungskraftmaschine (14) eines Fahrzeugs zum Ausführen des Verfahrens nach Anspruch 1, welche wenigstens einen ersten Zylinder (18, 20, 22) und wenigstens einen zweiten Zylinder (34, 36, 38) aufweist, mit einer Steuerungseinrichtung (54), mittels welcher ein Beaufschlagen der ersten und zweiten Zylinder (18, 20, 22, 34, 36, 38) mit voneinander verschiedenen Kraftstoffmengen bewirkbar ist, mit einer Abgasrückführleitung (30), über welche lediglich aus dem wenigstens einen ersten Zylinder (18, 20, 22) austretendes Abgas in einen Zulufttrakt (32) der Verbrennungskraftmaschine (14) rückführbar ist, wobei die Abgasrückführleitung (30) von einer ersten Abgasleitung (24) abzweigt, über welche Abgas des wenigstens einen ersten Zylinders (18, 20, 22) einer Abgasnachbehandlungseinrichtung (52) zuführbar ist, und mit einer zweiten Abgasleitung (42), über welche das Abgas des wenigstens einen zweiten Zylinders (34, 36, 38) ausschließlich der Abgasnachbehandlungseinrichtung (52) zuführbar ist, wobei in der ersten Abgasleitung (24) eine Verstelleinrichtung (48) angeordnet ist, mittels welcher die erste Abgasleitung (24) zumindest partiell versperrbar oder freigebbar ist.
**dadurch gekennzeichnet, dass**
die erste Abgasleitung (24) an eine erste, kleine Flut (26) einer asymmetrischen Turbine (28) eines Abgasturboladers und die zweite Abgasleitung (42) an eine zweite, größere Flut (44) der Turbine (28) des Abgasturboladers derart angeschlossen sind, dass Abgas des wenigstens einen ersten Zylinders (18, 20, 22) sich allenfalls stromabwärts der Turbine (28) mit Abgas des wenigstens einen zweiten Zylinder (34, 36, 38) vermischen kann.

9. Anordnung nach Anspruch 8,
**dadurch gekennzeichnet, dass**
mittels der Verstelleinrichtung (48) die Abgasmenge einstellbar ist, welche über die erste Abgasleitung (24) in den Zulufttrakt (32) der Verbrennungskraftmaschine (14) rückführbar ist.

## Claims

1. Method for treating exhaust gas of an internal combustion engine (14) with at least one first cylinder (18, 20, 22), the exhaust gas of which can be fed via a first exhaust gas line (24) to a first, smaller flow (26) of an asymmetric turbine (28) of a turbocharger and from there to a particle filter (52), and with at least one second cylinder (34, 36, 38), the exhaust gas of which can be fed via a second exhaust gas line (42) to a second, larger flow (44) of the turbine (28) and from there to the particle filter (52), in which method, for the regeneration of the particle filter (52),
- less fuel is introduced into the at least one first cylinder (18, 20, 22) than into the at least one second cylinder (34, 36, 38),
- exhaust gas discharged from the at least one first cylinder (18, 20, 22) is at least partially recirculated into a supply air train (32) of the internal combustion engine (14),
- the exhaust gas of the at least one second cylinder (34, 36, 38) is completely fed to the particle filter (52),
- the exhaust gas line (24) via which exhaust gas of the at least one first cylinder (18, 20, 22) can be fed to the particle filter (52) is at least partially blocked,
**characterised in that**
without any post-injection into the cylinders (18, 20, 22, 34, 36, 38), as much more fuel is introduced into the at least one second cylinder (34, 36, 38) as less fuel is introduced into the at least one first cylinder (18, 20, 22), wherein a torque of the internal combustion engine (14) which is obtainable at an even distribution of the fuel quantity to be provided for the said torque among the cylinders (18, 20, 22, 34, 36, 38) is at least substantially maintained.

2. Method according to claim 1,
**characterised in that**
by means of an adjusting device (48) designed for at least partially blocking or opening up the exhaust gas line (24), the exhaust gas quantity recirculated into the supply air train (32) of the internal combustion engine (14) is adjusted.

3. Method according to claim 1 or 2,
**characterised in that**
the internal combustion engine (14) is operated in a low to medium load range, while the exhaust gas line (24) is blocked completely and the exhaust gas discharged from the at least one first cylinder (18, 20, 22) is completely recirculated into the supply air train (32) of the internal combustion engine (14).

4. Method according to claim 3,
**characterised in that**
the internal combustion engine (14) is operated in a load range of 400 Nm to 800 Nm.

5. Method according to any of claims 1 to 4,
**characterised in that**
the respective supply air is fed to the at least one first cylinder (18, 20, 22) and to the at least one second cylinder (34, 36, 38) via the same supply air train (32).

6. Method according to any of claims 1 to 5,
**characterised in that**
the supply air is fed to the cylinders (18, 20, 22, 34, 36, 38) of the internal combustion engine (14) without restriction.

7. Method according to any of claims 1 to 6,
**characterised in that**
exhaust gas of the at least one first cylinder (18, 20, 22) is if necessary mixed with exhaust gas of the at least one second cylinder (34, 36, 38) downstream of the turbine (28).

8. Arrangement of a exhaust system (12) at an internal combustion engine (14) of a vehicle, which internal combustion engine (14) has at least one first cylinder (18, 20, 22) and at least one second cylinder (34, 36, 38), for implementing the method according to claim 1, with a control unit (54), by means of which an introduction of different fuel quantities into the first and second cylinders (18, 20, 22, 34, 36, 38) can be effected, with an exhaust gas recirculation line (30), by means of which only exhaust gas discharged from the at least one first cylinder (18, 20, 22) can be recirculated into a supply air train (32) of the internal combustion engine (14), wherein the exhaust gas recirculation line (30) branches off a first exhaust gas line (24), via which exhaust gas of the at least one first cylinder (18, 20, 22) can be fed to an exhaust treatment device (52) and with a second exhaust gas line (42), via which the exhaust gas of the at least one second cylinder (34, 36, 38) can be fed exclusively to the exhaust treatment device (52), wherein an adjusting device (48), by means of which the first exhaust gas line (24) can be at least partially blocked or opened up, is located in the first exhaust gas line (24), **characterised in that**
the first exhaust gas line (24) is connected to a first, smaller flow (26) of an asymmetric turbine (28) of a turbocharger and the second exhaust gas line (42) is connected to a second, larger flow (44) of the turbine (28) of the turbocharger in such a way that exhaust gas of the at least one first cylinder (18, 20, 22) can if necessary be mixed with exhaust gas of the at least one second cylinder (34, 36, 38) downstream of the turbine (28).

9. Arrangement according to claim 8.
**characterised in that**
by means of the adjusting device (48), the exhaust gas quantity to be recirculated via the first exhaust gas line (24) into the supply air train (32) of the internal combustion engine (14) can be adjusted.

## Revendications

1. Procédé de traitement des gaz d'échappement d'un moteur à combustion interne (14) comprenant au moins un premier cylindre (18, 20, 22) dont les gaz d'échappement pouvant être introduits par un premier tuyau d'échappement (24) dans un premier petit flux (26) d'une turbine asymétrique (28) d'un turbocompresseur à gaz d'échappement et ensuite dans un filtre à particules (52) et comprenant au moins un second cylindre (34, 36, 38) dont les gaz d'échappement pouvant être introduits par un second tuyau d'échappement (42) d'un second flux plus gros (44) de la turbine et ensuite dans le filtre à particules (52), pour la régénération du filtre à particules (52)
- moins de carburant étant introduit dans ledit premier cylindre (18, 20, 22) que dans ledit second cylindre (34, 36, 38),
- le gaz d'échappement sortant dudit premier cylindre (18, 20, 22) est ré-introduit au moins partiellement dans une conduite d'air admis (32) du moteur à combustion interne (14),
- le gaz d'échappement dudit second cylindre (18, 20, 22) étant introduit entièrement dans le filtre à particules (52),
- le tuyau d'échappement (24) qui introduit le gaz d'échappement dudit premier cylindre (18, 20, 22) dans le filtre à particules (52), étant au moins partiellement obstrué, **caractérisé en ce que**
en renonçant à une injection ultérieure dans le cylindre (18, 20, 22, 34, 36, 38) d'autant plus de carburant est introduit dans ledit second cylindre (34, 36, 38) que moins de carburant est introduit dans ledit premier cylindre (18, 20, 22), un couple du moteur à combustion interne (14) étant au moins sensiblement conservé, qui peut être atteint lors d'une distribution uniforme de la quantité de carburant à prévoir pour ce couple dans les cylindres (18, 20, 22, 34, 36, 38) du moteur à combustion interne.

2. Procédé selon la revendication 1, **caractérisé en ce qu'**un dispositif de réglage (48) conçu pour obstruer partiellement ou libérer le tuyau d'échappement (24) permet de régler la quantité de gaz d'échappement qui peut être réintroduite dans la conduite d'amenée d'air (32) du moteur à combustion interne (14).

3. Procédé selon la revendication 1 ou 2, **caractérisé en ce que** le moteur à combustion interne (14) fonctionne dans une plage de charge faible à moyenne et le tuyau d'échappement (24) est entièrement obstrué et le gaz d'échappement sortant dudit premier cylindre (18, 20, 22) est réintroduit dans la conduite d'amenée d'air (32) du moteur à combustion interne (14).

4. Procédé selon la revendication 3, **caractérisé en ce que** le moteur à combustion (14) fonctionne dans une plage de charge comprise entre 400 Nm et 800 Nm.

5. Procédé selon l'une des revendications 1 à 4, **caractérisé en ce que** l'air amené respectif est réintroduit dans ledit premier cylindre (1 !, 20, 22) et ledit second cylindre (34, 36, 38) par la même conduite d'amenée d'air (32).

6. Procédé selon l'une des revendications 1 à 5, **caractérisé en ce que** l'air amené est introduit dans les cylindres (18, 20, 22, 34, 36, 38) sans étranglement du moteur à combustion interne (14).

7. Procédé selon l'une des revendications 1 à 6, **caractérisé en ce que** le gaz d'échappement dudit premier cylindre (18, 20, 22) se mélange dans tous les cas en aval de la turbine (28) avec le gaz d'échappement dudit second cylindre (34, 36, 38).

8. Système de ligne d'échappement (12) sur un moteur à combustion interne (14) d'un véhicule automobile destiné à exécuter le procédé selon la revendication 1, présentant au moins un premier cylindre (18, 20, 22) et au moins un second cylindre (34, 36, 38), comprenant un dispositif de commande (54), qui permet d'alimenter en quantités différentes de carburant les premier et second cylindres (18, 20, 22, 34, 36, 38), comprenant une conduite de réintroduction de gaz d'échappement (30) qui permet de réintroduire le gaz d'échappement sortant uniquement dudit premier cylindre (18, 20, 22) dans une conduite d'amenée d'air (32) du moteur à combustion interne (14), la conduite de réintroduction de gaz d'échappement (30) bifurquant d'un premier tuyau d'échappement (24) qui peut acheminer le gaz d'échappement dudit premier cylindre (1 !, 20, 22) dans un dispositif de post-traitement de gaz d'échappement (52) et comprenant un second tuyau d'échappement (42) qui peut introduire le gaz d'échappement dudit second cylindre (34, 36, 38) exclusivement dans le dispositif de post-traitement de gaz d'échappement (52), dans la première conduite de gaz d'échappement (24) est disposé un dispositif de réglage (48) qui permet d'obstruer ou de libérer la première conduite de gaz d'échappement, au moins partiellement,
**caractérisé en ce que**
le premier tuyau d'échappement (24) est raccordé à un premier petit flux (26) d'une turbine asymétrique (28) d'un turbocompresseur à gaz d'échappement et le second tuyau d'échappement (42) à un second flux plus gros (44) de la turbine (28) du turbocompresseur à gaz d'échappement de sorte que le gaz d'échappement dudit premier cylindre (18, 20, 22) puisse se mélanger dans tous les cas en aval de la turbine (28) avec le gaz d'échappement dudit second cylindre (34, 36, 38).

9. Système selon la revendication 8, **caractérisé en ce que** le dispositif de réglage (48) peut régler la quantité de gaz d'échappement qui peut être réintroduite dans le conduit d'amenée d'air (32) du moteur à combustion interne (14) par le premier tuyau d'échappement (24).
